# FASCICULE DE BREVET EUROPEEN

(11) **EP 3 484 827 B1**
(45) Date de publication et mention de la délivrance du brevet: **01.07.2020**
(21) Numéro de dépôt: 17751791.9
(22) Date de dépôt: 12.07.2017
(51) Int. Cl.: C03C 3/091, C03C 13/06

(54) **FIBRES DE VERRE**
GLASFASERN
GLASS FIBERS

(30) Priorité: 13.07.2016 FR 1656757
(43) Date de publication de la demande: 22.05.2019
(73) Titulaire: SAINT-GOBAIN ISOVER, 92400 Courbevoie (FR)
(72) Inventeur: LECOMTE, Emmanuel, 02400 Nesles la Montagne (FR); ELLISON, Christopher, 60140 Liancourt (FR)
(74) Mandataire: Saint-Gobain Recherche
(86) Numéro de dépôt international: PCT/FR2017/000143
(87) Numéro de publication internationale: WO 2018/011478

(56) Documents cités:
- US-A1- 2003 000 254
- US-B1- 6 261 335

## Description

L'invention se rapporte au domaine des fibres de verre. Elle concerne plus particulièrement des fibres destinées à être incorporées dans des filtres ou des séparateurs de batterie ou autres articles techniques, en général dans des applications où les fibres sont présentes en tant que constituants de feuilles de papier. On entend par papier au sens de la présente invention des voiles formés par enchevêtrement de fibres de verre obtenus par un procédé papetier.

Usuellement, ces procédés consistent à mettre dans une suspension ou dispersion aqueuse des fibres de verre ayant les dimensions requises avec des additifs adaptés, coucher cette préparation liquide sur une bande filtrante, aspirer par des moyens de succion une partie excédentaire de la phase liquide, le cas échéant répéter l'étape de dépose de préparation aqueuse et filtration pour amener une quantité de fibres supplémentaires, en option pratiquer un pressage pour réduire l'épaisseur de la couche et extraire une quantité d'eau supplémentaire et terminer par une phase de séchage de la feuille fibreuse ainsi formée.

Les applications précitées exigent que les fibres de verre présentent une résistance chimique élevée, en particulier aux acides. Cette propriété est en particulier désirable dans le contexte de la fabrication de papiers. La résistance au vieillissement en milieu humide doit également être bonne, en particulier lorsque les filtres sont utilisés pour la filtration de l'air de salles blanches. Il est cependant important que les fibres soient aptes à être éliminées rapidement dans les fluides physiologiques de l'environnement du poumon afin d'éviter que leur inhalation provoque des maladies respiratoires.

D'autres propriétés avantageuses des fibres comprennent également la résistance mécanique, notamment à la traction, afin de faciliter la mise en forme et la manipulation ultérieure des feuilles de papier (déroulement, pliage, découpage...). La composition chimique du verre doit également être adaptée à la fusion puis à la formation de fibres fines, notamment par le procédé de fibrage par atténuation à l'aide d'une flamme, ce qui induit des exigences en termes de viscosité du verre et de température au liquidus. US 2003/0000254 et US 6,261,335 décrivent des fibres de verre.

L'invention a pour but de proposer des compositions de verre qui satisfassent ces différentes exigences. A cet effet l'invention a pour objet des fibres de verre dont la composition chimique comprend les constituants suivants, en une teneur pondérale variant dans les limites ci-après définies :

| | |
|---|---|
| SiO₂ | 50-70% |
| Al₂O₃ | 0-5% |
| CaO+MgO | 0-7% |
| Na₂O | 5-15% |
| K₂O | 0-10% |
| BaO | 2-10% |
| SrO | 2-10% |
| ZnO | < 2% |
| B₂O₃ | 5-15%. |

Dans l'intégralité du présent texte, les teneurs sont exprimées en pourcentages pondéraux.

La teneur en SiO₂ est de préférence comprise dans un domaine allant de 55 à 68%, notamment de 60 à 67%. Des teneurs trop élevées entraînent des viscosités trop importantes, qui vont pénaliser la fusion du verre ainsi que sa capacité à être fibré convenablement.

La teneur en Al₂O₃ est de préférence comprise dans un domaine allant de 1 à 4%, notamment de 1,5 à 2,5%. Sa présence conduit à renforcer la résistance au vieillissement du verre en milieu humide et la résistance à la traction. Des teneurs trop élevées sont toutefois susceptibles d'augmenter la biopersistance des fibres dans les poumons.

La somme des teneurs en CaO et MgO (notée CaO+MgO) est de préférence comprise dans un domaine allant de 2 à 6%, notamment de 2,5 à 5%. La teneur en CaO est de préférence comprise dans un domaine allant de 1 à 4%, notamment de 1,5 à 3%. La teneur en MgO est de préférence comprise dans un domaine allant de 1 à 3%, notamment de 1 à 2%. La présence de ces deux oxydes alcalino-terreux permet de faciliter la fusion du verre, mais une forte teneur peut accroître la température au liquidus et donc impacter négativement le fibrage du verre.

La teneur en Na₂O est de préférence comprise dans un domaine allant de 6 à 12%, notamment de 7 à 10%. La teneur en K₂O est de préférence comprise dans un domaine allant de 1 à 7%, notamment de 2 à 5%. La présence de ces oxydes alcalins permet également de faciliter la fusion du verre, mais des teneurs élevées conduisent à une dégradation de la résistance à l'humidité.

La teneur en BaO est de préférence comprise dans un domaine allant de 3 à 8%, notamment de 3 à 6%.

La teneur en SrO est de préférence comprise dans un domaine allant de 2 à 5%, notamment de 2 à 4%. Cet oxyde s'est révélé particulièrement bénéfique en ce qu'il contribue à réduire la biopersistance des fibres sans pénaliser la résistance aux acides et au vieillissement en milieu humide.

La teneur en ZnO est avantageusement d'au plus 1%, notamment est nulle, à l'exceptions d'impuretés indésirables.

La teneur en B₂O₃ est de préférence comprise dans un domaine allant de 8 à 13%, notamment de 9 à 12%. Cet oxyde présente un effet positif quant à la biopersistance des fibres.

Il va de soi que les différentes plages préférées décrites ci-avant peuvent être combinées librement les unes avec les autres, les différentes combinaisons ne pouvant toutes êtres énumérées pour des raisons de concision.

De préférence, la teneur totale en SiO₂, Al₂O₃, CaO, MgO, Na₂O, K₂O, BaO, SrO et B₂O₃ est d'au moins 95%, notamment 97% et même 98 ou 99%.

D'autres composants peuvent être présents dans la composition chimique de la fibre selon l'invention, soit volontairement, soit à titre d'impuretés présentes dans les matières premières ou provenant des réfractaires du four. Il peut s'agir en particulier de SO₃, provenant de l'ajout de sulfate de sodium ou de calcium en tant qu'affinant du verre. Il peut également s'agir d'oxydes de fer ou de titane, présents en tant qu'impuretés de nombreuses matières premières. Il peut encore s'agir de fluor (F₂), qui facilite la fusion du verre, ou d'oxyde de zirconium (ZrO₂), qui améliore la résistance mécanique des fibres.

Quelques combinaisons préférées sont décrites ci-après.

Selon un mode de réalisation préféré, les fibres de verre présentent une composition chimique comprenant les constituants suivants, en une teneur pondérale variant dans les limites ci-après définies :

| | |
|---|---|
| SiO₂ | 55-68% |
| Al₂O₃ | 1-4% |
| CaO | 1-4% |
| MgO | 1-3% |
| Na₂O | 6-12% |
| K₂O | 1-7% |
| BaO | 3-8% |
| SrO | 2-5% |
| ZnO | < 1% |
| B₂O₃ | 8-13%. |

Selon un mode de réalisation particulièrement préféré, les fibres de verre présentent une composition chimique comprenant les constituants suivants, en une teneur pondérale variant dans les limites ci-après définies:

| | |
|---|---|
| SiO₂ | 60-67% |
| Al₂O₃ | 1,5-2,5% |
| CaO | 1,5-3% |
| MgO | 1-2% |
| Na₂O | 7-10% |
| K₂O | 2-5% |
| BaO | 3-6% |
| SrO | 2-4% |
| ZnO | 0 |
| B₂O₃ | 9-12%. |

La composition chimique des fibres de verre selon l'invention est de préférence telle que la température à laquelle le verre présente une viscosité de 1000 Poises (1 Poise = 0,1 Pa.s) est d'au plus 1200°C, de préférence d'au plus 1150°C et même d'au plus 1100°C. De cette façon, la composition des fibres est parfaitement adaptée à un fibrage par atténuation à l'aide d'une flamme.

Le diamètre moyen des fibres selon l'invention est de préférence compris dans un domaine allant de 0,1 à 3 µm, notamment de 0,2 à 2 µm.

L'invention a aussi pour objet un procédé de fabrication de fibres de verre selon l'invention, comprenant une étape de fusion d'un verre possédant sensiblement la même composition chimique que celle desdites fibres, puis une étape de fibrage.

L'étape de fusion permet d'obtenir un bain de verre fondu à partir d'un mélange vitrifiable.

Le mélange vitrifiable comprend diverses matières premières naturelles et/ou artificielles, par exemple du sable de silice, des feldspaths, du carbonate de sodium, du borax, du carbonate de strontium etc...

L'étape de fusion peut être réalisée de différentes manières connues, notamment par fusion dans un four à flammes ou par fusion électrique.

Le four à flammes comprend au moins un brûleur, aérien (les flammes sont disposées au-dessus du bain de verre et le chauffent par rayonnement) ou immergé (les flammes sont créées directement au sein du bain de verre). Le ou chaque brûleur peut être alimenté par divers combustibles tels que le gaz naturel ou le fioul.

Par « fusion électrique », on entend que le verre est fondu par effet Joule, au moyen d'électrodes immergées dans le bain de verre, à l'exclusion de toute utilisation d'autres moyens de chauffage, tels que des flammes. Le mélange vitrifiable est normalement réparti de manière homogène sur la surface du bain de verre à l'aide d'un dispositif mécanique, et constitue ainsi un écran thermique limitant la température au-dessus du bain de verre, si bien que la présence d'une superstructure n'est pas toujours nécessaire. Les électrodes sont immergées dans le verre fondu. Elles peuvent être suspendues de manière à plonger dans le bain de verre par le dessus, être installées dans la sole, ou encore être installées dans les parois latérales de la cuve. Les deux premières options sont généralement préférées pour les cuves de grandes dimensions afin de répartir au mieux le chauffage du bain de verre. Les électrodes sont de préférence en molybdène, voire éventuellement en oxyde d'étain. Le passage de l'électrode en molybdène à travers la sole se fait de préférence par l'intermédiaire d'un porte-électrode en acier refroidi à l'eau.

Le fibrage est de préférence réalisé par atténuation à l'aide d'une flamme.

Le fibrage par atténuation à l'aide d'une flamme consiste à soumettre des fils de verre à une flamme à haute vitesse. Les fils sont étirés mécaniquement à partir d'une filière contenant le verre fondu, puis repris par la flamme issue d'un brûleur, ladite flamme se développant de préférence perpendiculairement à la direction du fil. La filière est de préférence munie dans sa partie inférieure d'une multiplicité d'orifices au travers desquels des filaments primaires sont formés, puis rassemblés de manière à former les fils de verre.

Selon un mode de réalisation, l'étape de fibrage peut être réalisée directement à partir du verre fondu obtenu par l'étape de fusion. Selon un autre mode de réalisation, le verre fondu est d'abord mis en forme sous forme de billes, lesquelles sont ensuite refondues dans la filière afin de former le verre fondu qui est ensuite soumis à l'étape de fibrage.

Le fibrage peut également être réalisé par d'autres procédés, notamment par centrifugation interne.

Le fibrage par centrifugation interne consiste à introduire un filet de verre fondu dans un centrifugeur, encore appelé assiette de fibrage, tournant à grande vitesse et percé à sa périphérie par un très grand nombre d'orifices par lesquels le verre est projeté sous forme de filaments sous l'effet de la force centrifuge. Ces filaments sont alors soumis à l'action d'un courant annulaire d'étirage à température et vitesse élevées qui est produit par un brûleur et qui longe la paroi du centrifugeur, courant qui les amincit et les transforme en fibres. Les fibres formées sont entraînées par ce courant gazeux d'étirage vers un dispositif de réception.

Un autre objet de la présente invention est une feuille de papier ou un voile comprenant des fibres selon l'invention.

La feuille de papier peut être produite par tout procédé connu, notamment par le procédé dit «papetier», consistant à disperser les fibres dans un milieu aqueux, généralement acide, à faire déposer les fibres sur une table par l'effet d'une dépression, puis à sécher la feuille obtenue.

Le voile est typiquement un voile non tissé de fibres de verre obtenu par la technique dite en voie sèche, dans laquelle des fibres issues du fibrage par voie aérodynamique, atténuation de flamme ou fibrage centrifuge sont collectées sur un organe de réception et mises en forme de feuille mince. Les non-tissés se distinguent des substrats de type papetier en ce qu'ils comprennent des fibres relativement longues, alors que les fibres utilisées pour le papier sont plus courtes, typiquement d'une longueur inférieure à 5 mm.

Un autre objet de l'invention est aussi un filtre ou un séparateur de batterie comprenant au moins une feuille de papier selon l'invention. Le filtre est notamment un filtre de type THE (Très Haute Efficacité), et est en particulier au moins de classe H12 au sens de la norme NF EN 1822.

Un autre objet de l'invention est une âme de panneau isolant, formée par la superposition d'une pluralité de feuilles de papier ou de voiles précédemment décrits.

Cette structure d'âme peut être utilisée pour former des panneaux isolants. Un autre objet de l'invention est donc un panneau isolant sous vide comprenant une âme selon l'invention disposée à l'intérieur d'une enveloppe étanche aux gaz, généralement en film plastique multicouche aluminisé ou incorporant au moins un feuillet d'aluminium, l'ensemble étant mis sous vide et scellé de sorte que la pression interne dans l'enveloppe soit de l'ordre de moins de 0,5 mbar.

Les voiles ou feuilles assemblé(e)s pour former l'âme peuvent être identiques entre eux/elles, ou différents, notamment par les caractéristiques des fibres les composant. Notamment, il est connu de former les faces externes de l'âme avec des fibres de relativement plus petit diamètre que les fibres présentes au cœur de l'âme, et ce afin de ne pas réduire les risques de percement de la membrane formant enveloppe. A titre indicatif, les fibres formant au moins les feuilles des faces externes de l'âme peuvent avoir des diamètres répartis entre environ 1 et environ 4 µm, pour des longueurs de 1 à 5 mm.

Les exemples qui suivent illustrent l'invention de manière non-limitative.

Des fibres présentant la composition chimique indiquée au tableau 1 ci-après ont été obtenues par fibrage par atténuation à l'aide d'une flamme.

Le tableau 1 indique également quelques températures caractéristiques notées Tx et correspondant respectivement à la température à laquelle le verre présente une viscosité de 10^{x} Poises (1 Poise = 0,1 Pa.s), les valeurs de x étant de 2, 2,5, 3, 3,5 et 4. Toutes ces températures sont exprimées en °C.

**Tableau 1**

| | Exemple 1 |
|---|---|
| SiO₂ | 65,0 |
| Al₂O₃ | 1,9 |
| B₂O₃ | 10,3 |
| Na₂O | 8,8 |
| K₂O | 2,8 |
| MgO | 1,3 |
| CaO | 2,1 |
| BaO | 4,3 |
| SrO | 2,8 |
| Impuretés | 0,7 |
| | |
| T2 | 1296 |
| T2,5 | 1153 |
| T3 | 1053 |
| T3,5 | 979 |
| T4 | 922 |

Les fibres ont subi un essai de biopersistance à court terme par instillation intratrachéale tel que requis par la note Q de la Directive 97/69/CE. La demi-vie était inférieure à 40 jours.

Des feuilles de papier destinées à être utilisées dans des filtres ont été fabriquées par un procédé papetier à partir des fibres. En termes de propriétés de filtration après vieillissement humide, les performances des feuilles obtenues sont meilleures que celles des feuilles obtenues à partir de fibres standard (biopersistantes). Les propriétés mécaniques (résistance à la traction, rigidité) sont également comparables, voire meilleures.

Le verre présentant la composition de l'exemple 1 a également fait l'objet d'un test de résistance hydrolytique. Selon cette méthode on plonge une poudre de verre broyée pour constituer une poudre de granulométrie de 360 à 400 micromètres dans de l'eau chauffée à reflux pendant 5 heures. Après un refroidissement rapide, on filtre le mélange et l'on effectue une mesure de matière sèche contenue dans le filtrat. La quantité de matière dissoute exprimée en milligrammes par gramme de verre traité, est de 40,7.

Le tableau 2 ci-après présent d'autres exemples de fibres selon l'invention.

**Tableau 2**

| | Exemple 2 | Exemple 3 | Exemple 4 |
|---|---|---|---|
| SiO₂ | 60,1 | 63,7 | 63,7 |
| Al₂O₃ | 2,1 | 1,8 | 2,8 |
| B₂O₃ | 10,8 | 11,0 | 11,0 |
| Na₂O | 9,3 | 8,6 | 9,0 |
| K₂O | 4,0 | 3,2 | 3,2 |
| MgO | 1,2 | 1,3 | 1,3 |
| CaO | 1,8 | 2,0 | 2,0 |
| BaO | 5,1 | 4,2 | 4,3 |
| SrO | 5,5 | 3,0 | 2,3 |
| Impuretés | 0,1 | 1,2 | 0,4 |

## Revendications

1. Fibres de verre dont la composition chimique comprend les constituants suivants, en une teneur pondérale variant dans les limites ci-après définies :
| | |
|---|---|
| SiO₂ | 50-70% |
| Al₂O₃ | 0-5% |
| CaO+MgO | 0-7% |
| Na₂O | 5-15% |
| K₂O | 0-10% |
| BaO | 2-10% |
| SrO | 2-10% |
| ZnO | < 2% |
| B₂O₃ | 5-15%. |

2. Fibres de verre selon la revendication précédente, telles que la teneur en SiO₂ est comprise dans un domaine allant de 55 à 68%, notamment de 60 à 67%.

3. Fibres de verre selon l'une des revendications précédentes, telles que la teneur en Al₂O₃ est comprise dans un domaine allant de 1 à 4%, notamment de 1,5 à 2,5%.

4. Fibres de verre selon l'une des revendications précédentes, telles que la teneur en CaO est comprise dans un domaine allant de 1 à 4%, notamment de 1,5 à 3%.

5. Fibres de verre selon l'une des revendications précédentes, telles que la teneur en MgO est comprise dans un domaine allant de 1 à 3%, notamment de 1 à 2%.

6. Fibres de verre selon l'une des revendications précédentes, telles que la teneur en BaO est comprise dans un domaine allant de 3 à 8%, notamment de 3 à 6%.

7. Fibres de verre selon l'une des revendications précédentes, telles que la teneur en SrO est comprise dans un domaine allant de 2 à 5%, notamment de 2 à 4%.

8. Fibres de verre selon l'une des revendications précédentes, telles que la teneur en ZnO est d'au plus 1%, notamment est nulle.

9. Fibres de verre selon l'une des revendications précédentes, telles que la teneur en B₂O₃ est comprise dans un domaine allant de 8 à 13%, notamment de 9 à 12%.

10. Fibres de verre selon l'une des revendications précédentes, dont le diamètre moyen est compris dans un domaine allant de 0,1 à 3 pm.

11. Feuille de papier ou voile comprenant des fibres selon l'une des revendications précédentes.

12. Filtre ou séparateur de batterie comprenant au moins une feuille de papier selon la revendication précédente.

13. Ame de panneau isolant, formée par la superposition d'une pluralité de feuilles de papier ou de voiles selon la revendication 11.

14. Panneau isolant sous vide, comprenant une âme selon la revendication précédente, disposée à l'intérieur d'une enveloppe étanche aux gaz, généralement en film plastique multicouche aluminisé ou incorporant au moins un feuillet d'aluminium, l'ensemble étant mis sous vide et scellé de sorte que la pression interne dans l'enveloppe soit de l'ordre de moins de 0,5 mbar.

15. Procédé de fabrication de fibres de verre selon l'une des revendications 1 à 10, comprenant une étape de fusion d'un verre possédant sensiblement la même composition chimique que celle desdites fibres, puis une étape de fibrage, notamment par atténuation à l'aide d'une flamme.

## Patentansprüche

1. Glasfasern, deren chemische Zusammensetzung die folgenden Bestandteile ein einem Gewichtsanteil umfasst, der innerhalb der nachstehend definierten Grenzen variiert:
| | |
|---|---|
| SiO₂ | 50-70 % |
| Al₂O₃ | 0-5 % |
| CaO+MgO | 0-7 % |
| Na₂O | 5-15% |
| K₂O | 0-10% |
| BaO | 2-10% |
| SrO | 2-10% |
| ZnO | < 2 % |
| B₂O₃ | 5-15 %. |

2. Glasfasern nach vorhergehendem Anspruch, wobei der SiO₂-Anteil in einem Bereich von 55 bis 68 %, insbesondere von 60 bis 67 % liegt.

3. Glasfasern nach einem der vorhergehenden Ansprüche, wobei der Al₂O₃-Anteil in einem Bereich von 1 bis 4 %, insbesondere von 1,5 bis 2,5 % liegt.

4. Glasfasern nach einem der vorhergehenden Ansprüche, wobei der CaO-Anteil in einem Bereich von 1 bis 4 %, insbesondere von 1,5 bis 3 % liegt.

5. Glasfasern nach einem der vorhergehenden Ansprüche, wobei der MgO-Anteil in einem Bereich von 1 bis 3%, insbesondere von 1 bis 2 % liegt.

6. Glasfasern nach einem der vorhergehenden Ansprüche, wobei der BaO-Anteil in einem Bereich von 3 bis 8 %, insbesondere von 3 bis 6 % liegt.

7. Glasfasern nach einem der vorhergehenden Ansprüche, wobei der SrO-Anteil in einem Bereich von 2 bis 5 %, insbesondere von 2 bis 4 % liegt.

8. Glasfasern nach einem der vorhergehenden Ansprüche, wobei der ZnO-Anteil höchstens 1 % beträgt, insbesondere Null ist.

9. Glasfasern nach einem der vorhergehenden Ansprüche, wobei der B₂O₃-Anteil in einem Bereich von 8 bis 13 %, insbesondere von 9 bis 12 % liegt.

10. Glasfasern nach einem der vorhergehenden Ansprüche, deren durchschnittlicher Durchmesser in einem Bereich von 0,1 bis 3 µm liegt.

11. Blatt Papier oder Gewebebahn, umfassend Fasern nach einem der vorhergehenden Ansprüche.

12. Filter oder Batterieseparator, umfassend mindestens ein Blatt Papier nach dem vorhergehenden Anspruch.

13. Dämmplattenkern, gebildet durch Überlagerung einer Mehrzahl von Blättern oder Bahnen nach Anspruch 11.

14. Vakuumdämmplatte, umfassend einen Kern nach vorhergehendem Anspruch, angeordnet im Inneren einer gasdichten Hülle im Allgemeinen aus aluminisierter mehrschichtiger Kunststofffolie oder die mindestens ein Aluminiumblatt enthält, wobei die Anordnung unter Vakuum gesetzt und versiegelt wird, sodass der Innendruck in der Hülle in der Größenordnung von weniger als 0,5 mbar liegt.

15. Verfahren zur Herstellung von Glasfasern nach einem der Ansprüche 1 bis 10, umfassend einen Schritt des Schmelzens eines Glases mit im Wesentlichen der gleichen chemischen Zusammensetzung wie die der Fasern, dann einen Schritt des Zerfaserns, insbesondere durch Dämpfung mithilfe einer Flamme.

## Claims

1. Glass fibers, the chemical composition of which comprises the following constituents, in a weight content that varies within the limits defined below:
| | |
|---|---|
| SiO₂ | 50-70% |
| Al₂O₃ | 0-5% |
| CaO+MgO | 0-7% |
| Na₂O | 5-15% |
| K₂O | 0-10% |
| BaO | 2-10% |
| SrO | 2-10% |
| ZnO | < 2% |
| B₂O₃ | 5-15%. |

2. The glass fibers as claimed in the preceding claim, such that the SiO₂ content is within a range extending from 55% to 68%, in particular from 60% to 67%.

3. The glass fibers as claimed in either of the preceding claims, such that the Al₂O₃ content is within a range extending from 1% to 4%, in particular from 1.5% to 2.5%.

4. The glass fibers as claimed in one of the preceding claims, such that the CaO content is within a range extending from 1% to 4%, in particular from 1.5% to 3%.

5. The glass fibers as claimed in one of the preceding claims, such that the MgO content is within a range extending from 1% to 3%, in particular from 1% to 2%.

6. The glass fibers as claimed in one of the preceding claims, such that the BaO content is within a range extending from 3% to 8%, in particular from 3% to 6%.

7. The glass fibers as claimed in one of the preceding claims, such that the SrO content is within a range extending from 2% to 5%, in particular from 2% to 4%.

8. The glass fibers as claimed in one of the preceding claims, such that the ZnO content is at most 1%, in particular is zero.

9. The glass fibers as claimed in one of the preceding claims, such that the B₂O₃ content is within a range extending from 8% to 13%, in particular from 9% to 12%.

10. The glass fibers as claimed in one of the preceding claims, the mean diameter of which is within a range extending from 0.1 to 3 µm.

11. A sheet of paper or a web comprising fibers as claimed in one of the preceding claims.

12. A filter or a battery separator comprising at least one sheet of paper as claimed in the preceding claim.

13. An insulation panel core, formed by the superposition of a plurality of sheets of paper or webs as claimed in claim 11.

14. A vacuum insulation panel, comprising a core as claimed in the preceding claim, positioned inside a gastight envelope, generally made of a multilayer plastic film that is aluminized or that incorporates at least one sheet of aluminum, the assembly being placed under vacuum and sealed so that the internal pressure in the envelope is of the order of less than 0.5 mbar.

15. A process for manufacturing glass fibers as claimed in one of claims 1 to 10, comprising a step of melting a glass having substantially the same chemical composition as that of said fibers, then a step of fiberizing, in particular by flame attenuation.
